# EUROPEAN PATENT APPLICATION

(11) **EP 0 930 622 A1**
(43) Date of publication of application: **21.07.1999**
(21) Application number: 98305944.5
(22) Date of filing: 27.07.1998
(51) Int. Cl.: H01B 7/28, H01B 3/44, C08L 23/08

(54) **Submergible electric motor having internal corrosion protection**

(30) Priority: 04.12.1997 US 985031
(71) Applicant: CAMCO INTERNATIONAL INC., Houston, Texas 77054 (US)
(72) Inventor: Bruewer, Timothy B., Lawrence, KS 66046 (US)
(74) Representative: Carter, Gerald

(57) **Abstract**

A submergible electric motor (18) has internal protection against corrosive fluids, such as H2S, attacking its windings. The motor comprises a motor housing (28) having a plurality of laminations (30) stacked there within, a drive shaft (36) longitudinally extending through the motor housing, and a plurality of electrical windings (34) extending through the laminations. The electrical windings are formed from magnet wire (32) comprising an electrical conductor (40), a metallic coating (42) surrounding the electrical conductor, and a polymeric insulation (44) surrounding the metallic coating and the electrical conductor. The metallic coating (42) acts as a fluid barrier to prevent corrosive fluids, such as H2S, from chemically attacking the electrical conductor.

## Description

The present invention relates to submergible electric motors and, more particularly, to internal corrosion protection for such electric motors.

Electric submergible pumping systems are widely used throughout the world for recovering subterranean fluids from wellbores to the earth's surface. In many wells, there are deleterious fluids that can chemically attack the materials used in the motor. For example, hydrogen sulfide will chemically attack the copper used in the motor's windings. If these deleterious fluids are not prevented from entering the motor, then the motor will prematurely fail.

For the long term successful operation of such submergible pumping systems, the electric motor must be supplied with uncontaminated cooling motor oil. This cooling oil is partially contained within one or more elastomeric bags within a motor protector. A problem encountered is that several deleterious fluids can easily pass through the elastomeric bags and enter the cooling oil, and then attack the motor windings and other internal components.

As used herein the term "deleterious fluids" means any liquid or gas that has a chemical reaction with or some other interaction with one or more of the internal workings of the motor that degrade the performance of the motor. Examples of such deleterious fluids are hydrogen sulfide (H2S), carbon dioxide (CO2) and methane (CH4). More specifically, such deleterious fluids usually comprise dissolved gasses in the motor's cooling oil. These gasses permeate the motor's and the protector's seals under wellbore pressures.

Various methods have been tried to prevent the deleterious fluids from attacking the motor windings. One method relies upon placing H2S scavenger agents within the motor protector to neutralize the deleterious effects of H2S. However, these scavenger agents are consumed and must be replaced, which is a costly and time consuming process. In addition, these scavenging agents do not neutralize the other deleterious fluids, such as carbon dioxide and methane.

There is a need for corrosion protection within a submergible electric motor that will not need to be replaced and is effective against a wide range of deleterious fluids.

The present invention has been contemplated to overcome the foregoing deficiencies and meet the above described needs. Specifically, the present invention is a submergible electric motor that has internal protection against deleterious fluids, such as H2S, attacking its windings. The motor comprises a motor housing having a plurality of laminations stacked there within, a drive shaft longitudinally extending through the motor housing, and a plurality of electrical windings extending through the laminations. The electrical windings are formed from magnet wire comprising an electrical conductor, a metallic coating surrounding the electrical conductor, and a polymeric insulation surrounding the metallic coating and the electrical conductor. The metallic coating acts as a fluid barrier to prevent any deleterious fluid from chemically attacking the electrical conductor. Further, the fluid barrier is permanent and is not consumed; therefore, the fluid barrier does not need to be replaced, as does prior scavenging systems.

### Brief description of the drawings:

Figure 1 is an elevational view of an ESP of the present invention within a wellbore.
Figure 2 is a cut away longitudinal view of one preferred embodiment of a submergible electric motor of the present invention.
Figure 3 is a cross-sectional, perspective view of one preferred embodiment of a multiconductor electrical cable of the present invention.

As has been briefly described above, the present invention is a submergible electric motor that has internal protection against deleterious fluids attacking its windings. Rather than relying upon external sources of protection, such as scavenging agents and the like, the inventor hereof has assumed that some deleterious fluids will enter the cooling oil of the motor and will come into contact with the motor windings. Therefore, the inventor focused on providing internal, permanent corrosion protection for the motor windings.

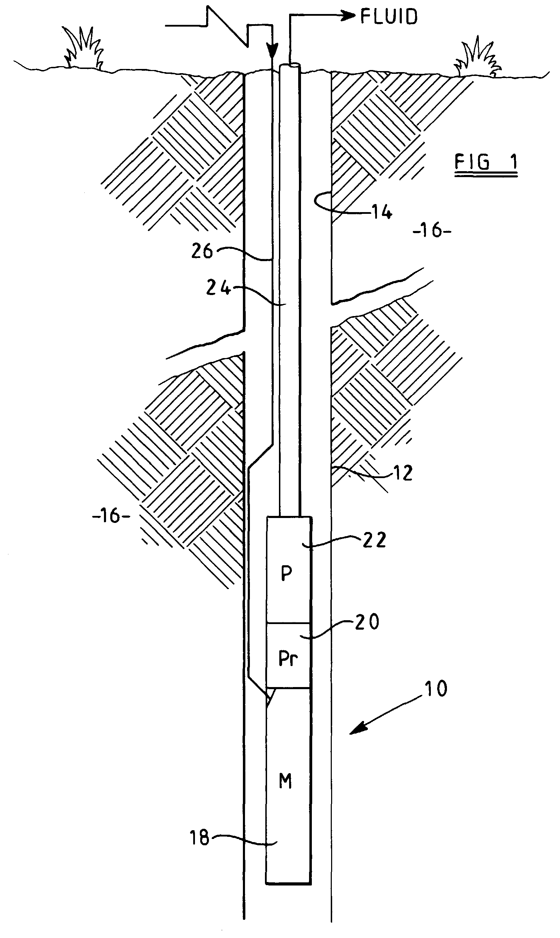

To better understand the present invention, reference is made to the accompanying drawings. Figure 1 shows an electric submergible pumping system or "ESP" 10 set within a casing 12, which is cemented within a subterranean wellbore 14 that penetrates one or more subterranean earthen formations 16. The ESP 10 comprises an electric motor 18 of the present invention , a motor protector 20, and a multi-stage pump 22 connected to production tubing 24. An electrical cable 26 extends from a surface power source downwardly within the casing 12 and is operatively connected to the electric motor 18.

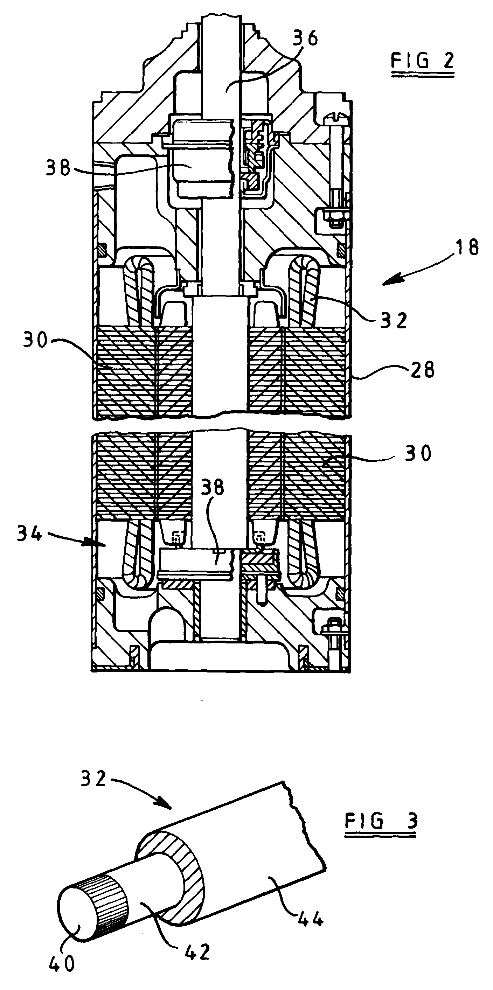

Internally, the electric motor 18 of the present invention includes, as shown in Figure 2, an elongated cylindrical motor housing 28 with a plurality of metallic laminations 30 stacked there within. To form the electrical phases a plurality of magnet wires 32 are wrapped around the laminations 30 to form what are called "windings" 34 of the motor 18. A drive shaft 36 longitudinally extends through the laminations 30 and at least two bearings 38, and extends out from the housing 28 for interconnection with the pump 22, as is well known to those skilled in the art. As shown in Figure 3, the magnet wire 32 is comprised of an electrical conductor 40, a metallic coating 42 to act as the fluid barrier, and a polymeric insulation 44. The electrical conductors 40 are single drawn wires of copper or copper alloys or a twist of several wires. For typical wellbore applications, the conductors 40 are single drawn copper wires having a diameter or gauge thickness of from about 0.160" (#6 AWG) to about 0.0050" (#16 AWG).

The metallic coating 42 is novel in its application and its material. By way of back ground, within electrical power cables 26 that must reside in an exposed state within the wellbore 14 for several years, it is known to coat the electrical conductors with a relatively thin coating of lead to act as a fluid barrier to corrosive fluids. This is needed because some corrosive fluids, such as H2S, can relatively easily pass through the outer armour, the polymeric jacket, and the polymeric insulation that surrounds the electrical conductor of the power cable 26. However, for magnet wires used within the windings of an electric motor, the electrical conductors have not had a metallic fluid barrier, but only had the polymeric insulation. In the past a fluid barrier was not used on magnet wire because the coating of lead would not withstand the application of the polymeric insulations used for magnet wire. The lead coating has a melting point of about 327 degrees C, whereas the polymeric insulation is heat extruded onto the conductor at about the same or higher temperature. Therefore, the lead coating, which is relatively soft at room temperature, would become soft and may melt to form pores and voids where the deleterious fluids could attack the copper conductor.

The inventor hereof found that a metallic coating could be successfully applied to magnet wire if a metal other than lead was used. Suitable metals include silver, magnesium, zinc, germanium, gold, nickel, tin, and alloys thereof. The metallic coating 42 is hot dipped, heat extruded or electroplated onto the electrical conductor 40, by methods well known to those skilled in the art. For cost considerations, the preferred metallic coating 42 is formed from either nickel or tin. Most preferably, the metallic coating 42 is formed from about 0.1 mil to about 0.9 mil layer of nickel that is electroplated onto a copper conductor.

The polymeric insulation 44 comprises at least layer of a polymeric insulating material selected from the group consisting of ethylene propylene diene methylene, ethylene propylene rubber, polychloroprene, polyimide, fluroelastomers, polypropylene, polyethylene, polyether, and copolymers, mixtures, blends and alloys thereof. If a polyether insulating material is selected, then preferred materials are selected from the group consisting of polyetherketone (PEK), polyetheretherketone (PEEK), polyetherketoneketone (PEKK), polyetherketoneetherketoneketone (PEKEKK), and mixtures, blends and alloys thereof. The polymeric insulating material is applied to the conductor 40 by spiral or longitudinal wrapping, or preferably by heat extrusion, as is well known to those skilled in the art.

Simple laboratory tests were conducted to determine the efficacy of the metallic coating of the present invention. It was found that a commercially available magnet wire formed from a copper conductor coated with polyetheretherketone (PEEK) insulation will fail electrically from corrosion at H2S concentrations over about 500 ppm. However, a magnet wire of the present invention was formed from a copper conductor coated with a 0.3 mil continuous coating of electroplated nickel, and coated with PEEK insulation. This new magnet wire of the present invention did not fail electrically from corrosion up to H2S concentrations of about five percent (5%) H2S.

As can be understood from the above discussion, the present invention provides internal corrosion resistance for the windings to prevent any deleterious fluid from chemically attacking the electrical conductor. Further, the fluid barrier is permanent and is not consumed; therefore, the fluid barrier does not need to be replaced, as does prior scavenging systems.

Whereas the present invention has been described in particular relation to the drawings attached hereto, it should be understood that other and further modifications, apart from those shown or suggested herein, may be made within the scope of the present invention as defined in the claims.

## Claims

1. A magnet wire for use in the windings of a submergible electric motor, comprising: an electrical conductor; a metallic coating surrounding the electrical conductor; and a polymeric insulation surrounding the metallic coating and the electrical conductor.

2. A magnet wire of Claim 1, wherein the electrical conductor further comprises at least one strand of copper wire.

3. A magnet wire of Claim 1 or Claim 2, wherein the metallic coating is at least one layer of electroplated nickel.

4. A magnet wire of Claim 1 or Claim 2, wherein the metallic coating is at least one layer of heat extruded tin.

5. A magnet wire of any of the preceding claims, wherein the polymeric insulation is selected from the group consisting of ethylene propylene diene methylene, ethylene propylene rubber, polychloroprene, polyimide, fluroelastomers, polypropylene, polyethylene, polyether, and copolymers, mixtures, blends and alloys thereof.

6. A magnet wire of any of Claims 1 to 5, wherein the polymeric insulation is selected from the group consisting of polyetherketone (PEK), polyetheretherketone (PEEK), polyetherketoneketone (PEKK), polyetherketoneetherketoneketone (PEKEKK), and mixtures, blends and alloys thereof.

7. A submergible electric motor comprising: a motor housing having a plurality of laminations stacked there within; a drive shaft longitudinally extending through the motor housing; a plurality of electrical windings extending through the laminations; and the electrical windings formed from magnet wire comprising an electrical conductor, a metallic coating surrounding the electrical conductor, and a polymeric insulation surrounding the metallic coating and the electrical conductor.

8. A submergible electric motor of Claim 7, wherein the electrical conductor further comprises at least one strand of copper wire.

9. A submergible electric motor of Claim 7 or Claim 8, wherein the metallic coating is at least one layer of electroplated nickel.

10. A submergible electric motor of Claim 7 or Claim 8, wherein the metallic coating is at least one layer of heat extruded tin.

11. A submergible electric motor of any of Claims 7 to 10, wherein the polymeric insulation is selected from the group consisting of ethylene propylene diene methylene, ethylene propylene rubber, polychloroprene, polyimide, fluroelastomers, polypropylene, polyethylene, polyether, and copolymers, mixtures, blends and alloys thereof.

12. A submergible electric motor of any of Claims 7 to 10, wherein the polymeric insulation is selected from the group consisting of polyetherketone (PEK), polyetheretherketone (PEEK), polyetherketoneketone (PEKK), polyetherketoneetherketoneketone (PEKEKK), and mixtures, blends and alloys thereof.
